# EUROPEAN PATENT APPLICATION

(11) **EP 4 395 049 A1**
(43) Date of publication of application: **03.07.2024**
(21) Application number: 22942942.8
(22) Date of filing: 26.12.2022
(51) Int. Cl.: H01M 50/533

(54) **CONNECTING PIECE DESIGN METHOD, CONNECTING PIECE, ENERGY STORAGE DEVICE, AND ELECTRIC DEVICE**

(30) Priority: 08.11.2022 CN 202211391375
(71) Applicant: Xiamen Hithium Energy Storage Technology Co., Ltd., Xiamen, Fujian 361006 (CN)
(72) Inventor: HUANG, Hanchuan, Fujian 361006 (CN)
(74) Representative: Mewburn Ellis LLP
(86) International application number: PCT/CN2022/142025
(87) International publication number: WO 2024/098529

(57) **Abstract**

The disclosure provides a design method for a connection sheet, a connection sheet, an energy storage device, and an electric device. The design method for the connection sheet includes: an area *S* of a welding region, connectable to a tab, of the connection sheet is obtained; the connection sheet is divided into a first effective region and a second effective region, where the first effective region is a region, having a regular shape, of the connection sheet, the second effective region is a region, connectable to a terminal post, of the connection sheet, the first effective region (10) is implemented as *N* first effective regions (10), *N*≥1, and multiple first effective regions (10) are connected on the same side of the second effective region (20); a gauge size of the first effective region is determined according to *S*= *a***S1*, a being in a range of 0.095~0.96, and *S1* being an area of the first effective region. Thus, an area of the welding region, connectable to a tab, of the connection sheet satisfies the overcurrent requirement, and gauge size of the first effective region is reasonable, so that design redundancy may be avoided, verification times in a design process is reduced. Moreover, the gauge size of the connection sheet is reasonable, so that the production cost may be reduced.

## Description

### CROSS-REFERENCE TO RELATED DISCLOSURE (S)

The application claims priority to Chinese Patent Application No. 202211391375.6, filed November 8, 2022, and entitled "DESIGN METHOD FOR CONNECTION SHEET, CONNECTION SHEET, ENERGY STORAGE DEVICE AND ELECTRIC DEVICE", the entire disclosure of which is incorporated herein by reference.

### TECHNICAL FIELD

The disclosure relates to the field of connection sheet technology, and in particular, to a design method for a connection sheet, a connection sheet, an energy storage device, and an electric device.

### BACKGROUND

As a metal conductor for leading out current of the bare cell, a connection sheet has one end connectable to a tab of the bare cell and the other end connectable to a terminal post. In the related art, a geometric dimension of a soft connection region in the connection sheet needs to be verified several times to avoid an insufficient overcurrent capacity or design redundancy. A large number of verifications are required, resulting in a high verification cost.

### SUMMARY

The disclosure is intended to solve at least one of technical problems existing in the related art. Therefore, a purpose of the disclosure is to provide a design method for a connection sheet. With the design method, the number of verifications in a design process of the connection sheet is reduced, so as to reduce verification cost.

The disclosure further provides a connection sheet based on the design method.

The disclosure further provides an energy storage device adopting the connection sheet.

The disclosure further provides an electric device adopting the energy storage device.

According to a first aspect of embodiments of the disclosure, a design method for a connection sheet includes the following. An area *S* of a welding region, connectable to a tab, of the connection sheet is obtained. The connection sheet is divided into a first effective region and a second effective region. The first effective region is a region, having a regular shape, of the connection sheet, and the second effective region is a region, connectable to a terminal post, of the connection sheet. The first effective region (10) is implemented as *N* first effective regions (10), where *N*≥1. Multiple first effective regions (10) are connected on the same side of the second effective region (20). A gauge size of the first effective region is determined according to *S*= *a***S1*, a being in a range of 0.095∼0.96, and *S1* being an area of the first effective region.

According to the design method for the connection sheet in embodiments of the disclosure, the connection sheet is divided into two regions, and the gauge size of the first effective region is set according to *S*= *a*S1*. The size of the welding region, connectable to the tab, of the connection sheet satisfies an overcurrent requirement, and the gauge size of the first effective region is reasonable, so that design redundancy may be avoided, verification times in the design process and verification cost are reduced. Moreover, the gauge size of the shaped connection sheet is reasonable, so that the production cost may also be reduced, the temperature rise requirement of the welding mark is ensured to be satisfied, and the service life is prolonged.

In some embodiments, the area *S* of the welding region, connectable to the tab, of the connection sheet is obtained as follows. An area of a part of the connection sheet where the tab is subject to continuous overcurrent and having temperature rise less than a set threshold is obtained as the area S of the welding region. Therefore, the area of the welding region may satisfy the overcurrent requirement, and the connection stability between the connection sheet and the tab is improved.

Further, the gauge size of the first effective region is determined as follow. When the welding region is in a shape of rectangle, the length of the first effective region is *x1* and the width of the first effective region is *y1*, and the length of the welding region is *x2* and the width of the welding region is *y2*, the length of the first effective region and the width of the first effective region are determined according to *x1*=*m*x2*, *y1*=*n*y2*, *a*=*m*n*, *m* being in a range of 0.1∼0.95, and *n* being in a range of 0.1∼0.95.

Further, the gauge size of the first effective region is determined as follows. When the welding region is in a shape of circle, the width of the first effective region is *y1*, and the radius of the welding region is *r1*, a length of the first effective region and the width of the first effective region are determined according to *r1*≤0.95*y1*.

Further, the gauge size of the first effective region is determined as follows. When the welding region is in a shape of oval, a longitudinal axis of the welding region is parallel to a width direction of the first effective region, a length of the longitudinal axis of the welding region is *L1*, and the width of the first effective region is *y1*, a length of the first effective region and the width of the first effective region are determined according to *L1*: *y1*=(0.2~0.95):1.

Further, adjacent first effective regions are spaced apart by a distance of *w1*, a width of each of the multiple first effective regions is w2, the width of the second effective region is w3, and w3=wl+Nw2, TV being the number of the multiple first effective regions (10).

According to a second aspect of embodiments of the disclosure, a connection sheet is provided. The connection sheet is applicable to a battery. The battery includes a tab and a terminal post. The connection sheet is connectable to the tab and the terminal post. The connection sheet includes *N* first effective regions and a second effective region, where *N*≥1. The *N* first effective regions each have a welding region connectable to the tab. The second effective region is connected to the *N* first effective regions. Multiple first effective regions are located on the same side of the second effective region. An area S of the welding region and an area *S1* of a first effective region satisfy *S*= *a*S1*, *a* being in a range of 0.095~0.96. During a preset cycle number of charging-and-discharging cycles of the battery, temperature rise of a welding mark in the welding region during charging-and-discharging is less than a temperature rise threshold, and a capacity retention rate A 85%, where the temperature rise threshold≤ 10°C, and the preset cycle number is in a range of [0, 1500]. Further, the preset cycle number is in a range of [0, 1000], and the capacity retention rate A 90%.

In some embodiments, the welding region is in a shape of rectangle, a length of the first effective region is *x1* and a width of the first effective region is *y1*, and a length of the welding region is *x2* and a width of the welding region is *y2*, *x1*=*m*x2*, *y1*=*n*y2*, *a*=*m*n*, *m* being in a range of 0.1∼0.95, and *n* being in a range of 0.1∼0.95.

Further, when the welding region is in a shape of circle, a width *y1* of the first effective region and a radius *r1* of the welding region satisfy *r1*≤0.95*y1*.

Further, when the welding region is in a shape of oval, a longitudinal axis of the welding region is parallel to a width direction of the first effective region, and a ratio of a length *L1* of the longitudinal axis to a width *y1* of the first effective region is (0.2∼0.95): 1.

According to a third aspect of embodiments of the disclosure, an energy storage device is provided. The energy storage device includes an end cap and a connection sheet. The end cap is provided with a terminal post, and the terminal post is connected to the connection sheet.

According to a fourth aspect embodiment of the disclosure, an electric device is provided. The electric device includes the above energy storage device.

Additional aspects and advantages of the disclosure will be given in part in the following descriptions. Part of additional aspects and advantages of the disclosure will become apparent from the following descriptions, or be learned from practice of the disclosure.

### BRIEF DESCRIPTION OF THE DRAWINGS

The above and/or additional aspects and advantages of the disclosure will become apparent and more readily appreciated from the following descriptions of embodiments taken in conjunction with the accompanying drawings.
FIG. 1 is a schematic diagram of a connection sheet according to embodiments of the disclosure.
FIG. 2 is a schematic diagram of a connection sheet according to other embodiments of the disclosure.
FIG. 3 is a flowchart of a design method according to embodiments of the disclosure.

Reference signs: connection tab 100; first effective region 10; welding region 11; and second effective region 20.

### DETAILED DESCRIPTION

Embodiments of the disclosure are described in detail below. Examples of the embodiments are illustrated in the accompanying drawings, in which the same or similar reference numerals denote the same or similar components or components having the same or similar functions throughout the context. Embodiments described below with reference to accompanying drawings are exemplary, and intended to explain the disclosure only, rather than limit the disclosure.

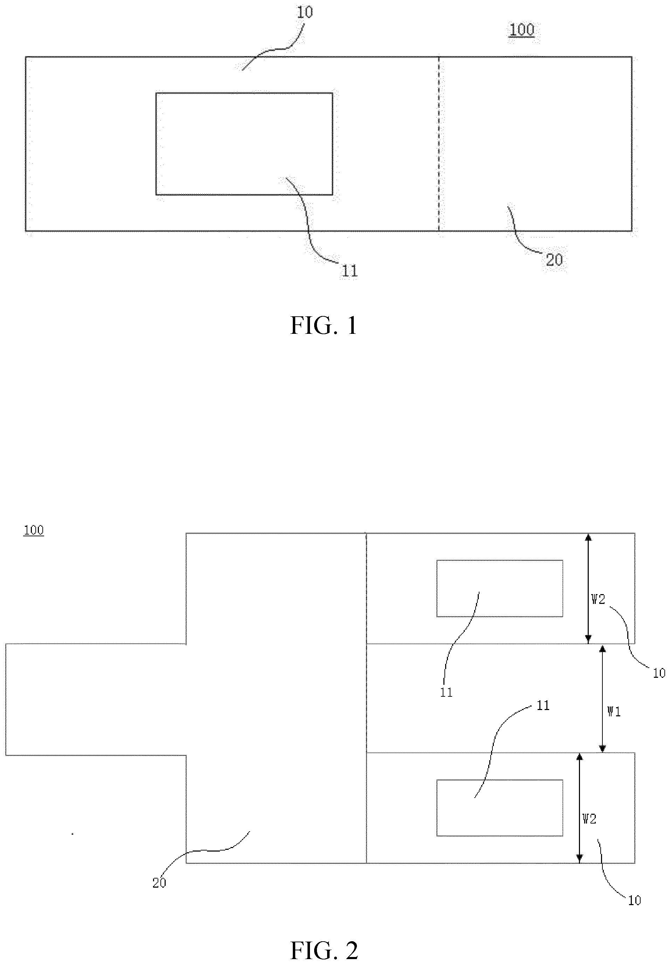

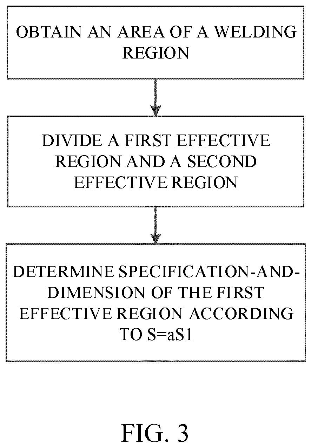

A design method for a connection sheet 100, a connection sheet 100, an energy storage device, and an electric device according to embodiments of the disclosure will be described below with reference to FIGS. 1 to 3.

As illustrated in FIGS. 1, 2 and 3, a design method for a connection sheet 100 according to a first aspect of embodiments of the disclosure includes the following. An area S of a welding region 11, connectable to a tab, of the connection sheet 100 is obtained. The connection sheet 100 is divided into a first effective region 10 and a second effective region 20. The first effective region 10 is a region, having a regular shape, of the connection sheet 100, and the second effective region 20 is a region of the connection sheet 100 connectable to a terminal post. The first effective region 10 is implemented as *N* first effective regions 10, where *N*≥1. Multiple first effective regions 10 are connected on the same side of the second effective region 20. A gauge size of the first effective region 10 is determined according to *S*= *a*S1,* a being in a range of 0.095∼0.96, and *S1* being the area of the first effective region 10.

Specifically, the connection sheet 100 is configured to be electrically connected to a tab and a terminal post of a bare cell. The connection sheet 100 is welded to the tab. The size of the welding region 11 is related to overcurrent capacity. In the design method of the disclosure, the area S of the welding region 11, connectable to the tab, of the connection sheet 100 is obtained first, and further the connection sheet 100 is divided into two effective regions. The first effective region 10 is in a regular shape (for example, in a shape of rectangle, square, etc.), which facilitates connection between the connection sheet 100 and the tab. The second effective region 20 needs to be rationally designed according to the shape of the terminal post, so the specific shape of the second effective region 20 is not specifically limited in the disclosure.

It may be noted that according to design requirements of the connection sheet 100, the first effective region 10 may be one (see FIG. 1) or more (see FIG. 2). In an embodiment in which the first effective region 10 is implemented as multiple first effective regions 10, the multiple first effective regions 10 are arranged on the same side of the second effective region 20, which facilitates a connection of each of the multiple first effective regions 10 with a corresponding tab and facilitates arrangement. Interference of the second effective region 20 may be avoided during connection of the first effective region 10 with the tab.

It may be understood that, the area of an effective region and the area *S1* of the welding region 11 satisfy *S*= *a*S1*, the gauge size of the first effective region 10 may be determined based on the ratio, and then the connection sheet 100 can be designed.

A preparation process of a lithium-ion (li-ion) battery is as follows. A positive electrode, a separator, and a negative electrode are placed in sequence. The separator is located between the positive electrode and the negative electrode to separate the positive electrode and the negative electrode. Then the positive electrode, the separator, and the negative electrode are winded to obtain a bare cell. A positive tab of the bare cell is welded with a positive adapter sheet, and a negative tab of the bare cell is welded with a negative adapter sheet. The welded bare cell is placed in a can and subject to drying. Electrolyte is injected through a liquid injection hole of an end cap. The li-ion battery is obtained through packaging, standing, and formation.

Embodiment 1: a 280Ah li-ion battery is produced. The area *S* of the welding region 11 satisfies *S*=5m*m**12mm. Preferably, *a*=0.81, *m*=0.9, and *n*=0.9. In other words, the length of the first effective region is 10.8mm, the width of the first effective region is 10.8mm, and the area *S1* of the first effective region is 48.6mm.

Embodiment 2: a 280Ah li-ion battery is produced. *S*=5mm*12mm. Preferably *a*=0.81, *m*=0.95, and *n*=0.842.

Embodiment 3: a 280Ah li-ion battery is produced. *S*=5mm*12mm. Preferably *a*=0.81, *m*=0.842, and *n*=0.95.

Embodiment 4: a 280Ah li-ion battery is produced. *S*=5mm*12mm. Preferably *a*=0.49, *m*=0.7, and *n*=0.7.

Embodiment 5: a 280Ah li-ion battery is produced. *S*=5mm *12mm. Preferably *a*=0.25, *m*=0.5, and *n*=0.5.

Embodiment 6: a 280Ah li-ion battery is produced. *S*=5mm *12mm. Preferably *a*=0.09, *m*=0.3, and *n*=0.3.

Comparative embodiment 1: a 280Ah li-ion battery is produced. *S*=5mm *12mm. *a*=1*. m*=*1*, and *n*=1*.*

Comparative embodiment 2: a 280Ah li-ion battery is produced. *S*=5mm *12mm. *a*=0.01, *m*=0.1, and *n*=0.1.

Comparative embodiment 3: a 280Ah li-ion battery is produced. *S*=5mm *12mm. *a*=0.97, *m*=0.985, and *n*=0.985.

**Table 1: comparison between embodiments of the disclosure and comparative embodiments**

| sample | assembly difficulty level | welding mismatch rate(%) | temperature rise of a welding mark during charging-and-discharging (°C) | whether an overcurrent requirement is satisfied | flexible connection cost(%) |
|---|---|---|---|---|---|
| embodiment 1 | easy | 0 | 5 | yes | 123 |
| embodiment 2 | easy | 0 | 8 | yes | 123 |
| embodiment 3 | easy | 0 | 10 | yes | 123 |
| embodiment 4 | medium | 0 | 3 | yes | 205 |
| embodiment 5 | medium | 0 | 3 | yes | 400 |
| embodiment 6 | difficult | 0 | 3 | yes | 1100 |
| comparative embodiment 1 | easy | 100 | 20 | no | 100 |
| comparative embodiment 2 | difficult | 0 | 3 | yes | 10000 |
| comparative embodiment 3 | difficult | 80 | 15 | no | 103 |
| note: a flexible connection cost of comparative embodiment 1 is a reference cost; the flexible connection cost is positively related to the area of the first effective region 10; and when temperature rise is below 10 °C, the overcurrent requirement is satisfied. | | | | | |

As may be seen from table 1, comparative embodiment 1 is a conventional technical solution, in which an area of the welding mark is the same as the area of the first effective region 10. For comparative embodiment 1, although the cost is low, requirements of overcurrent and temperature rise of the welding mark are not satisfied. However, comparative embodiment 2 is an improved conventional technical solution. For comparative embodiment 2, although requirements of overcurrent and temperature rise of the welding mark are satisfied, the cost increase is obvious. Comparative embodiment 3 is another improved conventional technical solution. For comparative embodiment 3, although the cost is low, a welding mismatch rate is high. By contrast, in a design method of the disclosure (embodiments 1 to 6), *S*= *a***S1*, where a is in range of 0.095 to 0.96. Requirements of overcurrent and temperature rise of the welding mark of the connection sheet 100 are satisfied, which improves use security, and in addition, a flexible connection cost is significantly reduced compared to comparative embodiment 2.

It may be noted that an assembly difficulty level may be defined according to a production rhythm. When the assembly difficulty level is difficult, the production rhythm and the production efficiency are low. When the assembly difficulty level is easy, the production rhythm >20 ppm(i.e. pieces per minute, pcs/min). When the assembly difficulty level is medium, the production rhythm is in a range of 10 ppm to 20 ppm. When the assembly difficulty level is difficult, the production rhythm is in a range of 0 to 10 ppm. When an area of a welding region where the tab is actually welded is less than an area S of a welding mark, a welding mismatch is recorded. A welding mismatch rate is a ratio of the number of connection sheets 100 having a welding mismatch to a total production number. Temperature rise of the welding mark during charging-and-discharging is, taking 25°C being a reference temperature, a difference between a maximum temperature and a reference temperature of the welding region during one charging-and-discharging cycle of the battery. The flexible connection cost is a material cost of a single connection sheet 100. The overcurrent requirement being satisfied is defined as: during one charging-and-discharging cycle of the battery, the maximum temperature of the welding region^ 10°C, which is deduced as follows. The area of the welding region represents an area of an overcurrent region. A larger overcurrent area leads to a better the flow conductivity. When the welding region 11 of the connection sheet 100 is too small, an internal resistance of the connection sheet 100 increases. Therefore, a voltage of the cycle of the battery decreases, and a battery capacity is affected. In addition, when the welding region of the connection sheet 100 is too small, an internal temperature of a battery is abnormal, which aggravates an increase of side reactions in a li-ion battery system, and results in consumption of active materials in the battery and attenuation of the battery.

**Table 2: comparative table of temperature rise of the welding mark and capacity retention ratios**

| cycle number | 3°C | 5°C | 8°C | 10°C | 15°C | 20°C |
|---|---|---|---|---|---|---|
| 0 | 100.00% | 100.00% | 100.00% | 100.00% | 100.00% | 100.00% |
| 100 | 98.55% | 98.50% | 98.45% | 98.40% | 97.30% | 96.00% |
| 200 | 97.25% | 97.20% | 97.15% | 97.10% | 94.80% | 92.63% |
| 300 | 96.15% | 96.10% | 96.05% | 96.00% | 93.00% | 90.20% |
| 400 | 95.25% | 95.20% | 95.15% | 95.10% | 91.50% | 88.17% |
| 500 | 94.45% | 94.40% | 94.35% | 94.30% | 90.20% | 86.42% |
| 600 | 93.65% | 93.60% | 93.55% | 93.50% | 89.00% | 84.80% |
| 700 | 92.85% | 92.80% | 92.75% | 92.70% | 87.80% | 83.18% |
| 800 | 92.05% | 92.00% | 91.95% | 91.90% | 86.70% | 81.69% |
| 900 | 91.25% | 91.20% | 91.15% | 91.10% | 85.60% | 80.21% |
| 1000 | 90.45% | 90.40% | 90.35% | 90.30% | 84.50% | 78.72% |
| 1200 | 88.85% | 88.80% | 88.75% | 88.70% | 82.50% | 76.02% |
| 1500 | 86.45% | 86.40% | 86.35% | 86.30% | 79.40% | 71.84% |

As may be seen from table 2, when the temperature rise of the welding mark is constant, as the number of charging-and-discharging cycles increases, a battery will gradually suffer loss, and the capacity retention ratio will gradually decrease. Under the same number of charging-and-discharging cycles, when the temperature rise of the welding mark exceeds a temperature threshold of 10°C, and the number of cycles is not less than 100, the capacity retention ratio will decrease significantly compared with the capacity retention ratio when the temperature rise of the welding mark does not exceed the temperature threshold. However, in the disclosure, it can be ensured that, the temperature rise of the welding mark of the connection sheet 100 is less than the temperature threshold, and the capacity retention rate of the corresponding battery may tend to be stable, so that a service life of the battery adopting the connection sheet 100 of the disclosure may be prolonged effectively.

According to a design method for the connection sheet 100 of embodiments of the disclosure, the connection sheet 100 is divided into two regions, and the gauge size of the first effective region 10 is set according to *S*= *a*S1.* The size of the welding region 11, connectable to the tab, of the connection sheet 100 satisfies the overcurrent requirement, and the gauge size of the first effective region is reasonable, so that design redundancy may be avoided, and verification times in the design process and verification cost are reduced. Moreover, the gauge size of the shaped connection sheet is reasonable, so that the production cost may also be reduced, the temperature rise requirement of the welding mark is ensured to be satisfied, and the service life is prolonged.

In some embodiments, the obtained area S of the welding region 11, connectable to the tab, of the connection sheet 100 specifically includes an area of a part of the connection sheet where the tab is subject to continuous overcurrent and having temperature rise less than a set threshold.

Exemplarily, a design maximum current of a bare cell is 10 A, and a maximum withstand temperature rise Δ T is 180°C. In this case, the area S of the welding region 11, connectable to the tab, of the connection sheet is obtained as follows. A current of 10 A is applied to the tab, and a temperature change of the welding region 11 is measured. When the current of 10 A is applied to the tab continuously, and the temperature rise of the welding region 11 is less than Δ T, an area of a connection region between the tab and the connection sheet 100 is the obtained area of the welding region 11 in the disclosure. As such, the area of the welding region 11 satisfies the overcurrent requirement, and the temperature change is lower than a set threshold during continuous overcurrent. In this way, disconnection between the connection sheet 100 and the tab is avoided, and connection stability between the connection sheet 100 and the tab is improved.

It may be understood that the area of the welding region 11 is an area of the connection region between the tab and the connection sheet 100, and a shape of the welding mark of the welding region 11 may be a rectangle, a circle, or an oval.
1. When the welding region 11 is in a shape of rectangle, the gauge size of the first effective region 10 is determined as follows. The length of the first effective region 10 is *x1* and the width of the first effective region 10 is *y1*, and the length of the welding region 11 is *x2* and the width of the welding region 11 is *y2.* The length of the first effective region 10 and the width of the first effective region 10 are determined according to *x1*=*m***x2*, *y1*=*n***y2*, *a*=*m***n*, *m* being in a range of 0.1∼0.95, and *n* being in a range of 0.1∼0.95.
2. When the welding region 11 is in a shape of circle, the gauge size of the first effective region 10 is determined as follows. When the welding region 11 is in a shape of circle, the width of the first effective region 10 is *y1*, and the radius of the welding region 11 is *r1,* the length of the first effective region 10 and the width of the first effective region 10 are determined according to *r1*≤*0.95y1*.
3. When the welding region 11 is in a shape of oval, the gauge size of the first effective region 10 is determined as follows. A longitudinal axis of the welding region 11 is parallel to a width direction of the first effective region 10, the length of the longitudinal axis of the welding region 11 is *L1*, and the width of the first effective region 10 is *y1.* The length of the first effective region 10 and the width of the first effective region 10 are determined according to *L1*: *y1*=(0.2∼0.95):1*.*

In conclusion, according to different shapes of the welding region 11, determination of the gauge size of the first effective region 10 is slightly different. When the welding region 11 is in a shape of rectangle, the length of the first effective region 10 is defined according to a proportionate relationship with the length of the welding region 11, and the width of the first effective region 10 is limited according to a proportionate relationship with the width of the welding region 11. When the welding region 11 is in shape of circle, at least the maximum diameter of the welding region 11 needs to be less than the width of the first effective region. When the welding region 11 is in shape of oval, the longitudinal axis of the welding region 11 is defined to be parallel to the width of the first effective region 10, and conforms to the above proportionate relationship. With this arrangement, while the area of the welding region 11 and the area of the first effective region 10 may meet proportionate requirements, a peripheral edge of the welding region 11 is ensured to be spaced apart from a peripheral edge of the first effective region 10. Therefore, the stability and security of welding are improved, and damage to surrounding components during welding is avoided.

As illustrated in FIGS. 1 and 2, adjacent first effective regions 10 are spaced apart by a distance of *w1*, the width of the first effective region 10 is *w2*, the width of the second effective region 20 is *w3*, and *w3* =*w1*+N*w2*. When the number of the first effective region 10 is one, the center of the first effective region 10 is coaxial with the center of the second effective region 20, the width of the second effective region 20 is *w3*, and *w3* =*w1*+*w2.*

The number of the first effective regions 10 corresponds to the number of winding cores. When multiple winding cores are provided, multiple first effective regions 10 are correspondingly provided. Each of the multiple first effective regions 10 correspondingly matches one winding core, so that the connection between the multiple winding cores and the connection sheet 100 is more stable and reliable. In addition, the multiple winding cores are connectable to the connection sheet 100 on the same side of the connection sheet 100, so that the assembly efficiency may be improved, and the interference of the second active region 20 may be avoided.

As illustrated in FIGS. 1 and 2, according to a second aspect of embodiments of the disclosure, a connection sheet 100 is provided. The connection sheet 100 is applicable to a battery. The battery includes a tab and a terminal post. The connection sheet 100 is connectable to the tab and the terminal post. The connection sheet 100 includes *N* first effective regions 10, and a second effective region 20, where *N*≥1. The *N* first effective regions 10 each have a welding region 11 connectable to the tab. The second effective region 20 is connected to the *N* first effective regions 10. Multiple first effective regions 10 are located on the same side of the second effective region 20. An area S of the welding region 11 and the area *S1* of the first effective region 10 satisfy *S*= *a***S1*, a being in a range of 0.095∼0.96.

During a preset cycle number of charging-and-discharging cycles of the battery, temperature rise of the welding mark in the welding region 11 during charging-and-discharging is less than a temperature rise threshold, and a capacity retention rate A 85%, where the temperature rise threshold≤ 10°C, and the preset cycle number is in a range of [0, 1500].

That is to say, in embodiments of the disclosure, for the connection sheet 100 designed by the above design method, temperature rise of the welding mark is always less than the temperature rise threshold of 10°C. As can be seen from embodiments illustrated in table 2 in which temperature rise of the welding mark is 3°C, 5°C, 8°C, and 10°C, during a cycle number of 0 to 1500 of charging-and-discharging cycles of the battery, the capacity retention rate of the battery may also reach above 86.3%. In this case, the capacity retention rate of the battery is more stable, and a service life of the battery may be prolonged effectively.

Multiple first effective regions 10 are located on the same side of the second effective region 20, so that the welding between each of multiple first effective regions 10 and a corresponding tab is simpler and more convenient, and the interference may be avoided in the second effective regions 20.

According to embodiments of the disclosure, the connection sheet 100 is obtained by above design method of the disclosure, the area of the first effective region 10 is more reasonable, and on the premise of satisfying the overcurrent requirement and improving the use security and reliability, the redundant design of the first effective region 10 may be avoided, the materials used are more reasonable, the production cost of the connection sheet 100 may be reduced, and the service life of the battery using the connection sheet 100 of the disclosure may be prolonged.

Further, the preset number of cycles is in a range of [0,1000], and the capacity retention ratio ≥ 90%.

Specifically, when the number of charging-and-discharging cycles of the connection sheet 100 of the embodiment of the disclosure reaches 1000, the capacity retention rate of the battery is still greater than 90%, which makes the electricity attenuation rate of the battery lower and the service life longer.

In some embodiments, when the welding region 11 is in a shape of rectangle, the length of the first effective region 10 is *x1* and the width of the first effective region 10 is *y1*, and the length of the welding region 11 is *x2* and the width of the welding region 11 is *y2*, *x1*=*m*x2*, *y1*=*n***y2*, *a*=*m***n*, *m* being in a range of 0.1∼0.95, and *n* being in a range of 0.1∼0.95. In other embodiments, when the welding region 11 is in a shape of circle, the width *y1* of the first effective region 10 and a radius *r1* of the welding region 11 satisfy *r1*≤0.95*y1*. In other embodiments, when the welding region 11 is in a shape of oval, a longitudinal axis of the welding region 11 is parallel to a width direction of the first effective region 10, and a ratio of the length *L1* of the longitudinal axis to the width *y1* of the first effective region 10 is (0.2-0.95): 1.

The welding region 11 may be in shape of rectangle, circle or oval. When the welding region 11 is in different shapes, the length of the first effective region 10 and the width of the first effective region 10 are limited according to the above proportionate relationships, so as to ensure that the size of the first effective region 10 is more reasonable. While reducing the cost, the welding mark may be ensured to fall in the first effective region 10 during welding, so that damage to surrounding components during welding is avoided, and the stability and security between the connection sheet 100 and the tabs and the stability and security between the connection sheet 100 and terminal posts during the welding processing are improved.

Exemplarily, as illustrated in embodiments 1 to 6, the temperature rise threshold in embodiments of the disclosure is 10°C, so that the area *S* of the welding region 11 and the area *S1* of the first effective region 10 satisfy *S*= *a*S1*, a being in a range of 0.095∼0.96, and temperature rise of the welding mark during charging-and-discharging is lower than 10°C, so that the connection sheet 100 in embodiments of the disclosure may satisfy an overcurrent requirement, and has higher use security.

According to embodiments of the disclosure, an energy storage device is provided. The energy storage device includes a can, an end cap covering the can, and the above mentioned connection sheet. The end cap is provided with a terminal post, and the terminal post is electrically connectable to the connection sheet.

That is to say, a battery core is disposed in the can, the end cap covers the can, and the battery core is electrically connectable to the terminal post through the connection sheet.

According to embodiments of the disclosure, an energy storage device adopts the above connection sheet, which may reduce production cost of the energy storage device and improve use security.

The disclosure further provides an electric device. The electric device adopts the above energy storage device, which has a consistent technical effect and is not described herein again.

It may be understood that directional relationship or positional relationship indicated by terms such as "center", "longitudinal", "lateral", "length", "width", "thickness", "on", "under", "front", "back", "left", "right", "vertical", "horizontal", "top", "bottom", "in", "out", "clockwise", "anticlockwise", "axial", "radial", "circumferential", and the like is directional relationship or positional relationship based on accompanying drawings and are only for the convenience of description and simplicity, rather than explicitly or implicitly indicate that apparatuses or components referred to herein must have a certain direction or be configured or operated in a certain direction, which may not be understood as limitation on the disclosure.

In description of the disclosure, "first feature" and "second feature" may include one or more of the feature.

In description of the disclosure, "multiple" means two or more than two.

In description of the disclosure, a first feature being "on" or "under" a second feature referred to herein may refer to a direct contact between the first feature and the second feature, or an indirect contact between the first feature and the second feature via another feature.

In description of the disclosure, the first feature being "above", "over", and "on" the second feature include the first feature being right above or obliquely above the second feature, or simply mean the first feature being at a higher horizontal level than the second feature.

The reference term "an embodiment", "some embodiments", "exemplary embodiment", "example", "specific example", or "some examples" etc. referred to herein means that a particular feature, structure, material, or characteristic described in conjunction with the embodiment or implementation may be contained in at least one embodiment or implementation of the disclosure. The phrase appearing in various places in the specification does not necessarily refer to the same embodiment or implementation. The particular feature, structure, material, or characteristic described may be properly combined in any one or more embodiments or implementations.

While embodiments of the disclosure are illustrated and described, those of ordinary skill in the art may understand that variations, changes, substitutions, and modifications may be made to these embodiments without departing from the principles and purposes of the disclosure, the scope of protection of the disclosure should be stated in the scope of protection of the claims and the equivalents.

## Claims

1. A design method for a connection sheet, comprising:
obtaining an area S of a welding region (11), connectable to a tab, of the connection sheet;
dividing the connection sheet into a first effective region (10) and a second effective region (20), wherein the first effective region (10) is a region, having a regular shape, of the connection sheet, the second effective region (20) is a region, connectable to a terminal post, of the connection sheet, the first effective region (10) is implemented as *N* first effective regions (10), *N*≥1, and a plurality of first effective regions (10) are connected on the same side of the second effective region (20); and
determining a gauge size of the first effective region (10) according to *S*= *a***S1*, a being in a range of 0.095∼0.96, and *S1* being an area of the first effective region (10).

2. The design method for the connection sheet of claim 1, wherein obtaining the area S of the welding region (11), connectable to the tab, of the connection sheet comprises:
obtaining an area of a part of the connection sheet where the tab is subject to continuous overcurrent and having temperature rise less than a set threshold as the area S of the welding region (11).

3. The design method for the connection sheet of claim 1, wherein determining the gauge size of the first effective region (10) comprises:
when the welding region (11) is in a shape of rectangle, a length of the first effective region (10) is *x1* and a width of the first effective region (10) is *y1,* and a length of the welding region (11) is *x2* and a width of the welding region (11) is *y2*, determining the length of the first effective region (10) and the width of the first effective region (10) according to *x1*=*m*x2*, *y1*=*n***y2*, *a*=*m***n*, *m* being in a range of 0.1∼0.95, and *n* being in a range of 0.1∼0.95.

4. The design method for the connection sheet of claim 1, wherein determining the gauge size of the first effective region (10) comprises:
when the welding region (11) is in a shape of circle, a width of the first effective region (10) is *y1*, and a radius of the welding region (11) is *r1*, determining a length of the first effective region (10) and the width of the first effective region (10) according to *r1*≤0.95*y1.*

5. The design method for the connection sheet of claim 1, wherein determining the gauge size of the first effective region (10) comprises:
when the welding region (11) is in a shape of oval, a longitudinal axis of the welding region (11) is parallel to a width direction of the first effective region (10), a length of the longitudinal axis of the welding region (11) is *L1*, and a width of the first effective region (10) is *y1,* determining a length of the first effective region (10) and the width of the first effective region (10) according to *L1: y1*=(0.2~0.95):1.

6. The design method for the connection sheet of claim 1, wherein adjacent first effective regions (10) are spaced apart by a distance of *w1*, a width of each of the plurality of first effective regions (10) is *w2*, a width of the second effective region (20) is *w3*, and *w3*=*w1*+N*w2*, *N* being the number of the plurality of first effective regions (10).

7. A connection sheet for a battery, the battery comprising a tab and a terminal post, the connection sheet being connectable to the tab and the terminal post and comprising:
*N* first effective regions (10), *N*≥1, the *N* first effective regions (10) each having a welding region (11) connectable to the tab;
a second effective region (20) connected to the *N* first effective regions (10), a plurality of first effective regions (10) being located on the same side of the second effective region (20); wherein
an area *S* of the welding region (11) and an area *S1* of a first effective region (10) satisfy *S*= *a*S1*, a being in a range of 0.095-0.96; and
during a preset cycle number of charging-and-discharging cycles of the battery, temperature rise of a welding mark in the welding region (11) during charging-and-discharging is less than a temperature rise threshold, and a capacity retention rate A 85%, wherein the temperature rise threshold≤ 10°C, and the preset cycle number is in a range of [0, 1500].

8. The connection sheet of claim 7, wherein the preset cycle number is in a range of [0,1000], and the capacity retention rate 90%.

9. The connection sheet of claim 7, wherein when the welding region (11) is in a shape of rectangle, a length of the first effective region (10) is *x1* and a width of the first effective region (10) is *y1*, and a length of the welding region (11) is *x2* and a width of the welding region (11) is *y2*, *x1=m*x2*, *y1*=*n***y2*, *a*=*m***n*, *m* being in a range of 0.1∼0.95, and *n* being in a range of 0.1∼0.95.

10. The connection sheet of claim 7, wherein when the welding region (11) is in a shape of circle, a width *y1* of the first effective region and a radius *r1* of the welding region satisfy *r1*≤ 0.95*y1*.

11. The connection sheet of claim 7, wherein when the welding region (11) is in a shape of oval, a longitudinal axis of the welding region (11) is parallel to a width direction of the first effective region (10), and a ratio of a length *L1* of the longitudinal axis to a width *y1* of the first effective region (10) is (0.2∼0.95):1.

12. An energy storage device, comprising:
a can;
an end cap covering the can; and
the connection sheet of any one of claims 7 to 11, wherein the end cap is provided with a terminal post, and the terminal post is connected to the connection sheet.

13. An electric device, comprising the energy storage device of claim 12.
